# EUROPÄISCHE PATENTSCHRIFT

(11) **EP 1 315 180 B1**
(45) Veröffentlichungstag und Bekanntmachung des Hinweises auf die Patenterteilung: **03.03.2004**
(21) Anmeldenummer: 01811097.3
(22) Anmeldetag: 14.11.2001
(51) Int. Cl.: H01F 27/28, H01F 41/00, B60L 9/30

(54) **Transformator und Einspeiseschaltung für Mehrsystem-Triebfahrzeuge**
Transformer and supply system for multisystem traction vehicles
Transformateur et circuit d'alimentation pour véhicules de traction à systèmes multiples

(43) Veröffentlichungstag der Anmeldung: 28.05.2003
(73) Patentinhaber: ABB Sécheron SA, 1211 Genève (CH)
(72) Erfinder: Zueger, Harry, 1219 Châtelaine/Genève (CH)
(74) Vertreter: ABB Patent Attorneys

(56) Entgegenhaltungen:
- EP-A- 0 904 973
- EP-A- 0 993 007
- EP-A- 1 052 136
- DE-A- 3 545 471
- US-A- 4 807 105
- US-A- 5 886 889
- US-B1- 6 239 999
- PATENT ABSTRACTS OF JAPAN vol. 014, no. 391 (E-0968), 23. August 1990 (1990-08-23) & JP 02 144903 A (TOSHIBA CORP), 4. Juni 1990 (1990-06-04)
- PATENT ABSTRACTS OF JAPAN vol. 017, no. 340 (E-1389), 28. Juni 1993 (1993-06-28) & JP 05 047571 A (MATSUSHITA ELECTRIC IND CO LTD), 26. Februar 1993 (1993-02-26)
- PATENT ABSTRACTS OF JAPAN vol. 005, no. 121 (E-068), 5. August 1981 (1981-08-05) & JP 56 061109 A (HITACHI LTD), 26. Mai 1981 (1981-05-26)
- COUSIN B ET AL: "A NEW GENERATION OF TRACTION TRANSFORMERS" TECHNICAL REVIEW GEC ALSTHOM, GEC ALSTHOM, PARIS, FR, Nr. 8, 1. Februar 1992 (1992-02-01), Seiten 15-22, XP000290873 ISSN: 1148-2893
- MORISI L ET AL: "HIGH PERFORMANCE MULTISYSTEM LOCOMOTIVE E 412 FOR THE ITALIAN STATERAILWAYS" EPE '95: 6TH. EUROPEAN CONFERENCE ON POWER ELECTRONICS AND APPLICATIONS. SEVILLA, SEPT. 19 - 21, 1995, EUROPEAN CONFERENCE ON POWER ELECTRONICS AND APPLICATIONS, BRUSSELS, EPE ASSOCIATION, B, Bd. 2 CONF. 6, 19. September 1995 (1995-09-19), Seiten 2066-2071, XP000537723

## Beschreibung

### TECHNISCHES GEBIET

Die vorliegende Erfindung bezieht sich auf das Gebiet der Mehrsystemtriebfahrzeuge. Sie betrifft eine Einspeiseschaltung gemäss dem Oberbegriff des Patentanspruchs 1 sowie eine Verwendung einer ersten Sekundärwicklung eines Traktionstransformators.

### STAND DER TECHNIK

Mehrsystemtriebfahrzeuge kommen dort zum Einsatz, wo während einer Fahrt die Systemspannung und/oder -frequenz ändert. Auf dem Europäischen Kontinent koexistieren insbesondere 25 kV/50 Hz oder 15 kV/16.7 Hz Wechselspannungssysteme sowie 3 kV oder 1.5 kV Gleichspannungsspeisenetze. Im Wechselstrombetrieb wird die Fahrleitungsspannung über einen Transformator auf einen gewünschten Wert transformiert und einem Umrichter oder Vierquadrantensteller zugeführt. Dieser wiederum speist einen Gleichspannungszwischenkreis, von welchem ausgehend ein Lastumrichter oder Pulswechselrichter die Antriebsmotoren ansteuert. Im Gleichstrombetrieb wird die Fahrleitungsgleichspannung direkt oder über Hoch- beziehungsweise Tiefsteller dem Zwischenkreis zugeführt. Die genannten Umrichter und Steller umfassen Schaltelemente auf Halbleiterbasis, welche in bestimmten Takten angesteuert werden und aus dem Speisenetz impulsförmige Ströme beziehen. Um zu verhindern, dass durch diese Schaltvorgänge im Fahrleitungsstrom und, bei schienengebundenen Fahrzeugen, im Schienenrückleitungsstrom zu grosse Schaltstörungen oder Oszillationen hervorgerufen werden, ist im Gleichstrombetrieb im Allgemeinen ein Glättungsfilter umfassend eine Glättungsspule und ein Glättungskondensator vorgesehen. Als Glättungsspule wird eine sogenannte Netzfilterdrossel zwischen den Stromabnehmer und den Umrichter oder Steller geschaltet. Die Grösse der Netzfilterdrossel, d.h. ihre Induktivität, wird dabei in Abhängigkeit der generierten Störschwingungen und der zulässigen netzseitigen Störströme bestimmt. Im Normalfall wird die genannte Netzfilterdrossel als separate Einheit mit entsprechendem Gewicht und Platzbedarf bereitgestellt.

Aus der Patentschrift DE 38 17 652 C 2 ist ein Mehrsystem-Triebfahrzeug bekannt, bei welchem im Wechselstrombetrieb ein Vierquadrantensteller eingangsseitig mit einer Sekundärwicklung des Haupttransformators und ausgangsseitig mit einem Saugkreis umfassend eine Saugkreisdrossel und einen Saugkreiskondensator verbunden ist. Es wird vorgeschlagen, im Gleichstrombetrieb den Saugkreis als Eingangsfilter, d.h die Saugkreisdrossel als Netzfilterdrossel einzusetzen. Gleichzeitig werden Sekundärwicklungen des Transformators unter Kurzschluss der zugehörigen Primärwicklungen als Stellerdrosseln für den Gleichspannungssteller verwendet. Diese Stellerdrosseln dienen nach Aufladung der Spannungshochsetzung und haben als Längsinduktivitäten auch eine Bedeutung im Rückspeisebetrieb bei Netzbremsung.

In der EP 0 993 007 schliesslich wird ein Unterflurtransformator für Triebzüge vorgeschlagen, bei welchem eine Sekundärwicklung konzentrisch um eine Primärwicklung gewickelt ist und welcher zwischen den einzelnen Wicklungslagen Kühlkanäle aufweist.

In der EP 1 052 136 A ist eine Einspeiseschaltung für Mehrsystemtriebzüge mit einer Zusatzdrossel gezeigt. Diese Zusatzdrossel dient sowohl als Netzfilterdrossel im Gleichstrombetrieb wie auch als Streuinduktivität in Serie zur Sekundärwicklung des Transformators im Wechselstrombetrieb. Als Streuinduktivität im Wechselstrombetrieb hält die Zusatzdrossel Störungen oder Kurzschlüsse vom Speisenetz fern und erlaubt es, den Transformator selbst mit geringeren Streuverlusten und damit kompakter auszulegen.

### DARSTELLUNG DER ERFINDUNG

Aufgabe der vorliegenden Erfindung ist es, bei Mehrsystemtriebfahrzeugen Platz und Gewicht einzusparen. Diese Aufgabe wird gelöst durch eine Einspeiseschaltung für Mehrsystemtriebfahrzeuge mit den Merkmalen des Patentanspruchs 1 sowie einer Verwendung einer ersten Sekundärwicklung eines Transformators mit den Merkmalen des Patentanspruchs 8. Kern der Erfindung ist es, die Funktion einer Netzfilterdrossel im Gleichstrombetrieb zumindest teilweise durch eine oder mehrere Sekundärwicklungen des Traktionstransformators wahrnehmen zu lassen. Dadurch kann auf eine separate Netzfilterdrossel, welche die gesamte, für eine effiziente Glättung von Schaltstörungen erforderliche Netzfilterinduktivität bereitstellt, verzichtet werden. Die betroffenen Sekundärwicklungen sind derart ausgelegt, dass ihre Gesamtinduktivität insbesondere dann signifikant zur benötigten Netzfilterinduktivität beitragen, wenn ein Kern des Transformators durch einen in den Sekundärwicklungen fliessenden Speisegleichstrom gesättigt ist und die Sekundärwicklungen somit als Luftspulen fungieren.

Ein erfindungsgemässer Transformator zeichnet sich dadurch aus, dass eine erste betroffene Sekundärwicklung konzentrisch zu einer Primärwicklung und, in radialer Richtung betrachtet, als äussere Wicklung gewickelt ist. Dadurch wird der Querschnitt der durch diese erste Sekundärwicklung gebildeten Spule und damit ihre Induktivität maximiert, ohne dass für den Wechselstrombetrieb unnötige Streuinduktivitäten entstehen.

Ist eine zweite Sekundärwicklung vorhanden, weil beispielsweise das Triebfahrzeug auch für eine zweite Speisewechselspannung ausgelegt ist, so wird diese zweite Sekundärwicklung auf die erste Sekundärwicklung gewickelt und mit letzterer in Serie geschaltet. Diese Serieschaltung wiederum weist infolge der zusätzlichen Windungen der zweiten Sekundärwicklung eine weiter erhöhte Induktivität im Gleichstrombetrieb auf.

Falls der Transformator im Gleichstrombetrieb gesättigt ist, werden die magnetischen Felder durch den Transformatorkern nicht mehr vollständig geführt, so dass mehr Streufelder insbesondere in Richtung der Transformatorachse auftreten. Entsprechend neuester Gesetzgebung und/oder nationaler Normen (wie VDE 0848 Teil 4 A3; OVE 1119; NISV 814.710) sind deratige Streufelder zum Schutz von Personen und elektrischen Installationen in 1.5 m Entfernung nur bis zu einer Feldstärke bis zu 300 µT (16.7 Hz), 100 µT (50 Hz) und 1mT bei Gleichstrom akzeptabel. Die aus diesem Grund im vorliegenden Fall erforderliche magnetische Abschirmung aus einem Material hoher Permeabilität ist vorteilhafterweise mit dem Transformatorgehäuse identisch, Letzteres wird zudem geeigneterweise aus Stahl gefertigt.

In einem erfindungsgemässen Verfahren zur Herstellung des Transformators wird die benötigte Netzfilterinduktivität nebst anderen Randbedingungen bei der Dimensionierung der Sekundärwicklungen mitberücksichtigt. Die Anordnung und Abfolge der Leiterwindungen sowie der Leiterquerschnitt der Sekundärwicklungen werden im Hinblick auf den sie im Gleichstrombetrieb durchfliessenden Speisegleichstrom optimiert.

Gemäss einer vorteilhaften Ausführungsform des Verfahrens wird das Transformatorgehäuse als magnetische Abschirmung eingesetzt und so ausgelegt, dass die durch den Speisegleichstrom ausserhalb des Gehäuses erzeugten Magnetfelder keine Grenzwerte überschreiten.

Bei einer erfindungsgemässen Einspeiseschaltung für Gleichstrombetrieb ist die besagte Sekundärwicklung mit einem Stromabnehmer in Reihe geschaltet und trägt ihren Teil zur Netzfilterinduktivität bei. Vorzugsweise durch den Speisegleichstrom wird der Transformatorkern vollständig gesättigt, so dass für die Sekundärwicklung eine gegenüber dem ungesättigten Fall zwar reduzierte, dafür aber konstante Induktivität entsprechend einer Luftspule mit den gleichen geometrischen Ausmassen erreicht wird.

Umfasst der Transformator mehrere Wicklungspaare, oder sind pro Wicklungspaar mehrere getrennt zuschaltbare Sekundärwicklungen vorgesehen, oder sind zusätzlich Hilfswicklungen vorhanden, können die Induktivitäten aller zur Verfügung stehender Wicklungen beliebig kombiniert werden, um zu einer bestimmten, für den betrachteten Gleichstrombetrieb erforderlichen Netzfilterinduktivität zu gelangen. Falls zwei veschiedene Speisegleichspannungen zur Verfügung stehen, sind insbesondere zwei Kombinationsmöglichkeiten basierend ausschliesslich auf Sekundärwicklungen in Betracht zu ziehen.

Weitere vorteilhafte Ausführungsformen gehen aus den abhängigen Patentansprüchen hervor.

### KURZE BESCHREIBUNG DER FIGUREN

Nachfolgend wird die Erfindung anhand von Ausführungsbeispielen im Zusammenhang mit den Zeichnungen näher erläutert. Es zeigen
Fig.1 schematisch drei mögliche Einspeiseschaltungen für Mehrsystemtriebfahrzeuge,
Fig.2 einen erfindungsgemässen Traktionstransformator,
Fig.3 die Induktivität einer Sekundärwicklung in Abhängigkeit des Spulenstromes, und
Fig.4 drei mögliche Verschaltungen von Transformatorwicklungen im Wechsel- und Gleichstrombetrieb.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

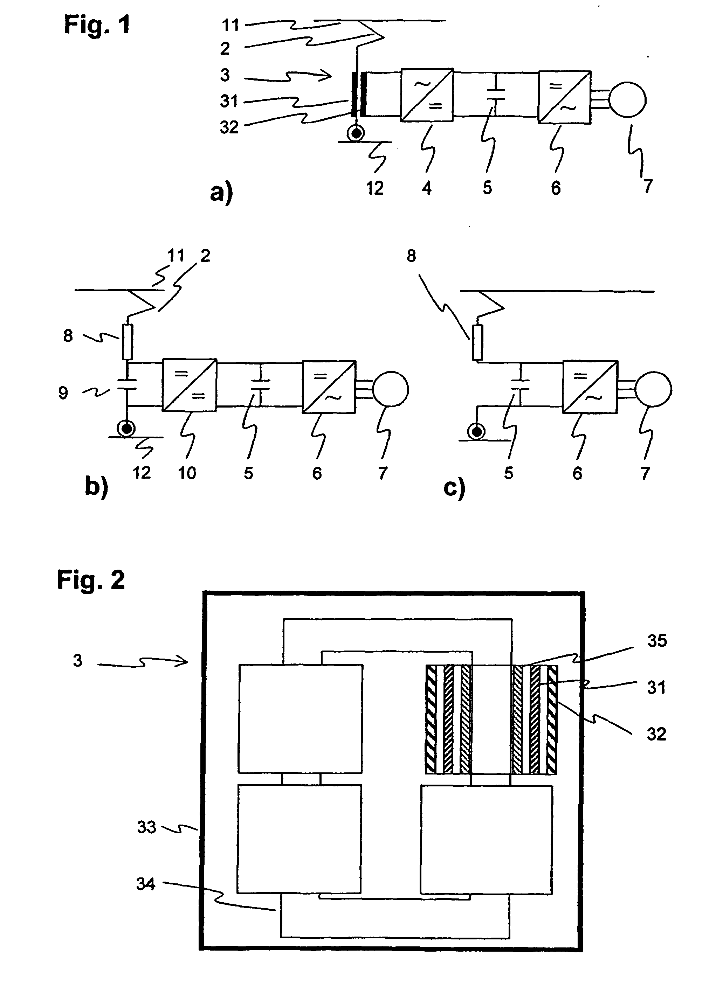

In Fig. ist eine Einspeiseschaltung für Mehrsystemtriebfahrzeuge sowie ein Speisenetz 1 umfassend Fahrleitungsdraht 11 und Schiene 12 gezeigt. Im einphasigen Wechselstrombetrieb (Fig.1a) ist eine Primärwicklung 31 eines Traktionstransformators 3 über einen Stromabnehmer 2 mit dem Fahrleitungsdraht 11 und über ein Rad mit der Schiene 12 verbunden. Sekundärseitig ist der Transformator 3 an einen Vierquadrantensteller 4 angeschlossen, welcher einen Gleichspannungszwischenkreis mit einem Zwischenkreiskondensator 5 speist und auf einer Zwischenkreisspannung U_{Z} von beispielsweise 2.8 kV hält. Ein Lastumrichter 6 steuert die Antriebe 7 des Triebfahrzeuges. Im Gleichstrombetrieb (Fig.1b) ist eine Netzfilterdrossel 8 über einen Stromabnehmer 2 an den Fahrleitungsdraht 11 angeschlossen und über einen Glättungskondensator 9 mit der Schiene 12 verbunden. Parallel zum Glättungskondensator 9 ist ein Gleichspannungssteller 10 geschaltet, welcher eine zu stark von der Zwischenkreisspannung U_{Z} abweichende Speisegleichspannung U_{DC}, beispielsweise 1.5 kV, auf den Zwischenkreiswert anhebt oder absenkt, also als Hochsetzoder Tiefsetzsteller arbeitet. Sind Speisegleichspannung U_{DC} und Zwischenkreisspannung U_{Z} in etwa gleich, kann die Netzfilterdrossel 8 auch direkt mit dem Zwischenkreis verbunden sein (Fig. 1c).

In Fig.2 ist ein erfindungsgemässer Traktionstransformator 3 schematisch dargestellt. In einem Transformatorgehäuse 33 befindet sich ein Transformatorkern 34, welcher von vier Wicklungspaaren umfassend je eine Primär- und eine oder mehrere zugeordnete Traktionssekundärwicklungen umwickelt ist. Die Verschaltung der Primärwicklungen untereinander ist je nach Speisewechselspannung zu wählen. Bei bestimmten Vierquadrantenstellern speisen jeweils zwei Wicklungspaare zusammen einen Zwischenkreis. Ein Wicklungspaar ist im Schnitt gezeigt, man erkennt die unterschiedlichen Wicklungen, von innen nach aussen folgen sich, jeweils durch eine Isolationsschicht getrennt, eine Hilfssekundärspule 35 für Hilfsbetriebe, eine Primär- oder Hochspannungswicklung 31, und eine Sekundär- oder Niederspannungswicklung 32. Das Transformatorgehäuse 33 ist aus Stahl gefertigt, so dass die Streufelder abgeschirmt werden. Gehäuse aus rostfreiem Stahl oder Aluminium sind aus diesem Grund weniger geeignet, ausser zusammen mit einer zusätzlichen separaten magnetischen Abschirmung im Transformatorinnenraum. Aus Gründen der beträchtlichen Streufeldintensität senkrecht zur Transformatorachse sind Scheibenwicklungen (alternated pancake windings) weniger geeignet als die gezeigten konzentrischen Lagenwicklungen.

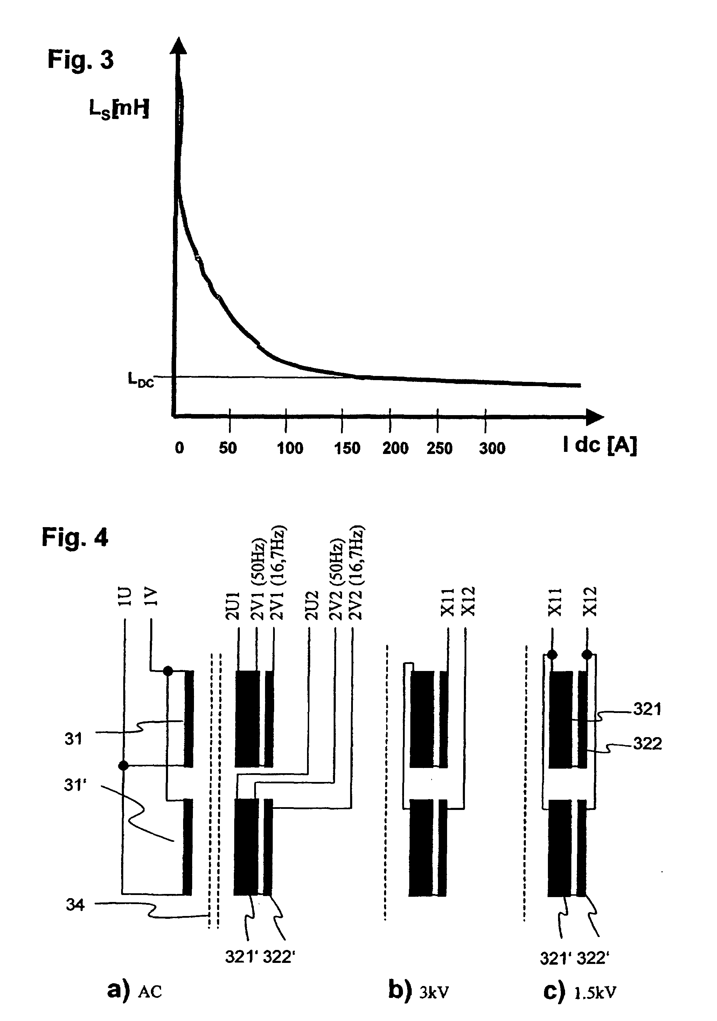

In Fig.3 ist der Verlauf der Induktivität einer Sekundärspule schematisch gezeigt. Bei sehr kleinen Spulenströmen I_{DC} ist diese Induktivität hoch, aber ab einem gwissen Sättigungsspulenstrom ist der Transformatorkern vollständig gesättigt, und die Induktivität L_{S} der Sekundärspule nimmt einen konstanten Wert L_{DC} an. Diese Induktivität stellt sich den durch die Schaltvorgänge in den Umrichtern generierten Stromschwankungen entgegen.

In Fig.4 schlussendlich sind schematisch zwei Wicklungspaare eines erfindungsgemässen Transformators dargestellt. Wie aus Fig.4a ersichtlich, sind die Primärwicklungen 31,31' der beiden Wicklungspaare dabei parallelgeschaltet, können in anderen Fällen aber auch in Serie geschaltet oder zu einer einzigen Primärwicklung zusammengefasst sein, d.h die an einer Primärwicklung 31,31' anliegende Wechselspannung kann, muss aber nicht gleich der Speisespannung des Speisenetzes sein. Sekundärseitig sind erste Sekundärwicklungen 321,321' und zweite Sekundärwicklungen 322,322' vorhanden. Im Wechselstrombetrieb (Fig.4a) werden bei 50 Hz nur die ersten Sekundärwicklungen 321,321' eingesetzt, d.h. die Sekundärspannung wird an den Anschlüssen 2U1 und 2V1(50Hz) beziehungsweise 2U2 und 2V2(50Hz) abgegriffen. Bei einer Netzfrequenz von 16,7 Hz werden beide Sekundärwicklungen 321,322; 321',322' eines jeden Wicklungspaares in Serie geschaltet und die Anschlüsse 2U1 und 2V1(16,7Hz) beziehungsweise 2U2 und 2V2(16.7Hz) benutzt. Im Gleichstrombetrieb bei einer Speisespannung von 3 kV (Fig.4b, die Primärwicklungen sind nicht mehr dargestellt) sind beide Sekundärwicklungen beider Wicklungspaare in Serie geschaltet. Damit lässt sich eine maximale Netzfilterinduktivität zwischen den Anschlüssen X11 und X12 erreichen. Bei einer Speisegleichspannung von 1.5 kV (Fig.4c, wiederum nur Sekundärseite dargestellt) bildet eine Parallelschaltung der innerhalb eines Wicklungspaares seriegeschalteten Sekundärwicklungen 321,322; 321',322' die Induktivität. Nichtdargestellte und ausserhalb des Transformators angeordnete Schalter erlauben ein einfaches Umschalten zwischen den beiden Gleichstrom-Konfigurationen.

Die geforderten Werte für die Netzfilterinduktivität L_{F} liegen bei 10-30 mH für eine Speisegleichspannung von 3 kV und bei 3-25 mH für eine solche von 1.5 kV. Durch eine geeignete Serie und/oder Parallelschaltung von zwei oder mehrerer der genannten Sekundärwicklungen, eventuell unter Miteinbezug von weiteren Wicklungen wie der Hilfssekundärspule, lassen sich Induktivitäten von 6-40 mH bereitstellen und somit die geforderten Werte für L_{F} erzielen. Notfalls ist zur Ergänzung eine zusätzliche Spule ohne Verwendung im Wechselstrombetrieb und mit einer Induktivität, welche nur einen Bruchteil von L_{F} ausmacht, vorzusehen. Bei Gleichstromleistungen von 0.8 bis 8 MVA beträgt der Gesamt-Speisegleichstrom 500 A oder mehr. Auch bei einer Parallelschaltung zweier Sekundärwicklungen (Fig.4c) liegt dann der Spulenstrom I_{DC} deutlich oberhalb des Sättigungsspulenstromes einer einzelnen Sekundärwicklung.

Es ist zu beachten, dass die Netzfilterinduktivität L_{F} auf eine bestimmte Taktfrequenz der Schaltvorgänge ausgelegt ist. Um weitere harmonische Schwingungen ebenfalls zu dämpfen, können weitere Filter mit entsprechenden Drosselspulen vorgesehen sein. Da diese durchwegs bei Vielfachen der genannten Taktfrequenz arbeiten, sind die Anforderungen an ihre Induktivität natürlich geringer und damit ihr Volumen a priori nicht so bedeutend wie dasjenige einer separaten Netzfilterdrossel.

Das Verfahren zur Herstellung beziehungsweise Auslegung eines geeigneten Traktionstransformators startet mit der Vorgabe der geforderten Netzfilterinduktivität L_{F}, unter der Randbedingung einer minimalen Transformatormasse bei akzeptablen Verlusten. Eine äquivalente alternative Randbedingung ist die Vorgabe eines bestimmten Transformatorvolumens. Es wird festgelegt, wieviele und welche der Traktionssekundärwicklungen zur Erzielung der Netzfilterinduktivität L_{F} benötigt werden, und wie unter diesem Gesichtspunkt die Wicklungen anzuordnen sind und deren Leiterquerschnitte gewählt werden müssen. Der Abstand zwischen der äussersten Wicklung und dem Transformatorgehäuse wird anschliessend bevorzugt durch numerische Simulationen ermittelt, d.h. in Kenntnis der im Gleichstromfall zu erwartenden Speisegleichstromstärken und Magnetfelder.

### BEZUGSZEICHENLISTE

- 1: Speisenetz
- 11: Fahrleitungsdraht
- 12: Schiene
- 2: Stromabnehmer
- 3: Transformator
- 31,31': Primärwicklung
- 32,32': Sekundärwicklung
- 33: Transformatorgehäuse
- 34: Transformatorkern
- 35: Hilfssekundärspule
- 4: Umrichter, Vierquadrantensteller
- 5: Zwischenkreiskondensator
- 6: Lastumrichter
- 7: Antrieb
- 8: Netzfilterdrossel
- 9: Glättungskondensator
- 10: Gleichspannungssteller
- U_{Z}: Zwischenkreisspannung
- L_{F}: Netzfilterinduktivität
- L_{S}: Sekundärspuleninduktivität

## Patentansprüche

1. Einspeiseschaltung für einen Gleichstrombetrieb eines Mehrsystemtriebfahrzeuges, umfassend einen Stromabnehmer (2) zur Kontaktierung eines Fahrleitungsdrahtes (1) und eine Netzfilterdrossel (8) mit einer Netzfilterinduktivität,
wobei für einen Wechselstrombetrieb des Mehrsystemtriebfahrzeuges ein Transformator (3) mit mindestens einem Wicklungspaar umfassend eine Primärwicklung (31) und eine erste, konzentrisch zu der Primärwicklung (31) angeordnete Sekundärwicklung (321) zur Transformation einer an der Primärwicklung (31) anliegenden ersten Wechselspannung vorhanden ist,
**dadurch gekennzeichnet, dass** die erste Sekundärwicklung (321) ausserhalb der Primärwicklung (31) angeordnet ist und dass die Netzfilterdrossel (8) die erste Sekundärwicklung (321) umfasst.

2. Einspeiseschaltung nach Anspruch 1, **dadurch gekennzeichnet, dass** die Netzfilterdrossel (8) eine Serieschaltung der ersten Sekundärwicklung (321) und einer weiteren, konzentrisch zur Primärwicklung (31) angeordneten und zu dem mindestens einen Wicklungspaar des Transformators (3) gehörenden Wicklung (35,322) umfasst.

3. Einspeiseschaltung nach Anspruch 2, **dadurch gekennzeichnet, dass** die weitere Wicklung eine zweite Sekundärwicklung (322) ist zur Transformation einer im Wechselstrombetrieb des Mehrsystemtriebfahrzeuges an der Primärwicklung (31) anliegenden zweiten Wechselspannung.

4. Einspeiseschaltung nach Anspruch 2, **dadurch gekennzeichnet, dass** die weitere Wicklung eine Hilfssekundärwicklung (35) ist.

5. Einspeiseschaltung nach einem der Ansprüche 1 bis 4, wobei durch die erste Sekundärwicklung (321) ein Speisegleichstrom fliesst, **dadurch gekennzeichnet, dass** ein Transformatorkern (34) des Transformators (3) durch den Speisegleichstrom gesättigt ist.

6. Einspeiseschaltung nach Anspruch 5, **dadurch gekennzeichnet, dass** eine magnetische Abschirmung aus einem hochpermeablen Material die Wicklungen (31,32) und den Transformatorkern (34) umgibt.

7. Einspeiseschaltung nach Anspruch 6, **dadurch gekennzeichnet, dass** das hochpermeable Material Stahl umfasst und die magnetische Abschirmung das Transformatorgehäuse (33) ist.

8. Verwendung einer ersten Sekundärwicklung (321) als Teil einer Netzfilterdrossel (8) für einen Gleichstrombetrieb eines Mehrsystemtriebfahrzeugs, wobei die erste Sekundärwicklung (321) konzentrisch zu und ausserhalb einer Primärwicklung (31) angeordnet ist und mit dieser ein erstes Wicklungspaar eines Transformators (3) zur Transformation einer an der Primärwicklung (31) anliegenden ersten Wechselspannung für einen Wechselstrombetrieb des Mehrsystemtriebfahrzeuges bildet.

9. Verwendung nach Anspruch 8, **dadurch gekennzeichnet, dass** zu dem ersten Wicklungspaar eine weitere, konzentrisch zur Primärwicklung (31) angeordnete Wicklung (35,322) gehört, welche als Teil der Netzfilterdrossel (8) mit der ersten Sekundärwicklung (321) in Serie geschaltet ist.

10. Verwendung nach einem der Ansprüche 8 oder 9, **dadurch gekennzeichnet, dass** ein Transformatorkern (34) des Transformators (3) durch einen durch die erste Sekundärwicklung (321) fliessenden Speisegleichstrom gesättigt ist und eine magnetische Abschirmung aus einem hochpermeablen Material die Wicklungen (31,32) und den Transformatorkem (34) umgibt.

## Claims

1. A feed circuit of a multi-system motive power unit for d.c. operation, having a current collector (2) for making contact with a contact wire (1), and a filter inductor (8) with a filter inductance (L_{F}),
a transformer (3) having at least one pair of windings comprising a primary winding (31) and a first secondary winding (321) for transforming a first a.c. voltage supplied to the primary winding (31) being provided for the a.c. operation of the multi-system motive power unit, wherein the first secondary winding (321) is arranged concentrically to the primary winding (31),
**characterized in that** the first secondary winding (321) is arranged outside of the primary winding (31) and **in that** the filter inductor (8) comprises the first secondary winding (321).

2. The feed circuit as claimed in claim 1,
**characterized in that** the filter inductor (8) comprises a series connection of the first secondary winding (321) and a further winding (35,322) arranged concentrically to the primary winding (31) and belonging to the at least one pair of windings of the transformer (3).

3. The feed circuit as claimed in claim 2,
**characterized in that** the further winding is a second secondary winding (322) for transforming a second a.c. voltage supplied to the primary winding (31).

4. The feed circuit as claimed in claim 2,
**characterized in that** the further winding is an auxiliary secondary winding (35).

5. The feed circuit as claimed in one of claims 1 to 4, a feed d.c. current flowing through the first secondary winding (321), **characterized in that** a transformer core (34) of the transformer (3) is saturated by the feed d.c. current.

6. The feed circuit as claimed in claim 5,
**characterized in that** a magnetic shielding composed of a highly permeable material surrounds the windings (31, 32) and the transformer core (34).

7. The feed circuit as claimed in claim 6,
**characterized in that** the highly permeable material comprises steel, and the magnetic shielding is the transformer housing (33).

8. A use of a first secondary winding (321) as part of a filter inductor (8) for the d.c. operation of a multi-system motive power unit, wherein the first secondary winding (321) is arranged concentrically to and outside of a primary winding (31) and wherein the first secondary winding (321) and the primary winding (31) form a first pair of windings for transforming a first a.c. voltage supplied to the primary winding (31) for the a.c. operation of the multi-system motive power unit.

9. The use as claimed in claim 8, **characterized in that** the first pair of windings comprises a further winding (35,322) arranged concentrically to the primary winding (31) and which further winding is switched in series with the first secondary winding (321) as part of the filter inductor (8).

10. The use as claimed in claim 8 or 9, **characterized in that** a transformer core (34) of the transformer (3) is saturated by a feed d.c. current flowing through the first secondary winding (321), and **in that** a magnetic shielding composed of a highly permeable material surrounds the windings (31, 32) and the transformer core (34).

## Revendications

1. Circuit d'alimentation pour un fonctionnement en courant continu d'un véhicule moteur multicourants comprenant un pantographe (2) destiné à établir le contact avec une caténaire (1) et une bobine de filtrage secteur (8) ayant une inductance de filtrage secteur, un transformateur (3) comportant au moins une paire d'enroulements comprenant un enroulement primaire (31) et un premier enroulement secondaire (321) disposé de manière concentrique par rapport à l'enroulement primaire (31) et destiné à transformer une première tension alternative appliquée à l'enroulement primaire (31) étant présent pour un fonctionnement en courant alternatif du véhicule moteur multicourants, **caractérisé en ce que** le premier enroulement secondaire (321) est disposé à l'extérieur de l'enroulement primaire (31) et que la bobine de filtrage secteur (8) comprend le premier enroulement secondaire (321).

2. Circuit d'alimentation selon la revendication 1, **caractérisé en ce que** la bobine de filtrage secteur (8) comprend un circuit série composé du premier enroulement secondaire (321) et d'un enroulement (35, 322) supplémentaire, disposé de manière concentrique par rapport à l'enroulement primaire (31) et faisant partie de l'au moins une paire d'enroulements du transformateur (3).

3. Circuit d'alimentation selon la revendication 2, **caractérisé en ce que** l'enroulement supplémentaire est un deuxième enroulement secondaire (322) destiné à transformer une deuxième tension alternative appliquée à l'enroulement primaire (31) en fonctionnement en courant alternatif du véhicule moteur multicourants.

4. Circuit d'alimentation selon la revendication 2, **caractérisé en ce que** l'enroulement supplémentaire est un enroulement secondaire auxiliaire (35).

5. Circuit d'alimentation selon l'une des revendications 1 à 4, un courant continu d'alimentation circulant à travers le premier enroulement secondaire (321), **caractérisé en ce qu'**un noyau de transformateur (34) du transformateur (3) est saturé par le courant continu d'alimentation.

6. Circuit d'alimentation selon la revendication 5, **caractérisé en ce qu'**un blindage magnétique réalisé dans un matériau hautement perméable entoure les enroulements (31, 32) et le noyau du transformateur (34).

7. Circuit d'alimentation selon la revendication 6, **caractérisé en ce que** le matériau hautement perméable comprend de l'acier et le blindage magnétique est le boîtier du transformateur (33).

8. Utilisation d'un premier enroulement secondaire (321) comme partie d'une bobine de filtrage secteur (8) pour un fonctionnement en courant continu d'un véhicule moteur multicourants, le premier enroulement secondaire (321) étant disposé de manière concentrique par rapport à un enroulement primaire (31) et à l'extérieur de celui-ci et forme, avec celui-ci, une première paire d'enroulements d'un transformateur (3) destiné à transformer une première tension alternative appliquée à l'enroulement primaire (31) pour un fonctionnement en courant alternatif du véhicule moteur multicourants.

9. Utilisation selon la revendication 8,
**caractérisée en ce qu'**un enroulement (35, 322) supplémentaire, disposé de manière concentrique par rapport à l'enroulement primaire (31) et branché en série avec le premier enroulement secondaire (321) en tant que partie de la bobine de filtrage secteur (8), fait partie de la première paire d'enroulements.

10. Utilisation selon l'une des revendications 8 ou 9, **caractérisée en ce qu'**un noyau de transformateur (34) du transformateur (3) est saturé par un courant continu d'alimentation qui circule à travers le premier enroulement secondaire (321) et un blindage magnétique réalisé dans un matériau hautement perméable entoure les enroulements (31, 32) et le noyau du transformateur (34).
